# FASCICULE DE BREVET EUROPEEN

(11) **EP 1 568 552 B1**
(45) Date de publication et mention de la délivrance du brevet: **20.12.2006**
(21) Numéro de dépôt: 05300145.9
(22) Date de dépôt: 24.02.2005
(51) Int. Cl.: B60R 21/34, B60K 11/04, B62D 25/08

(54) **Agencement d'un module fonctionnel sur une structure avant de véhicule**
Anordnung eines Funktionsmoduls auf einem Vorderbau eines Fahrzeugs.
Arrangement of a functional module on a front structure of a vehicle

(30) Priorité: 27.02.2004 FR 0450377
(43) Date de publication de la demande: 31.08.2005
(73) Titulaire: Peugeot Citroen Automobiles, 78140 Velizy Villacoublay (FR)
(72) Inventeur: Gavillon, Paul, 25200, Grand Charmont (FR); Virgoulay, Christophe, 25200, Montbeliard (FR)
(74) Mandataire: De Cuenca, Emmanuel Jaime

(56) Documents cités:
- EP-A- 1 398 199
- DE-A1- 10 042 562
- GB-A- 2 184 700

## Description

L'invention se rapporte à un agencement d'un module fonctionnel sur une structure avant de véhicule. Le document DE 100 42 562 décrit un agencement selon le préambule de la revendication 1.

L'invention concerne plus particulièrement un agencement d'un module fonctionnel sur une structure avant de véhicule comportant des moyens de fixation inférieurs assurant la fixation de la partie inférieure du module sur une partie inférieure de la structure et des moyens de fixation supérieurs assurant la fixation de la partie supérieure du module sur une partie supérieure de la structure de façon à disposer le module dans un plan sensiblement perpendiculaire à l'axe longitudinal du véhicule et de façon que, lors d'un choc d'une intensité déterminée au niveau de la partie avant du véhicule, au moins une partie du module effectue un déplacement guidé vers l'arrière de la structure.

Un tel agencement est connu notamment des documents DE 10008638 et EP 1106413. Ces documents décrivent un radiateur qui est fixé par son extrémité inférieure sur un élément transversal inférieur d'une structure de véhicule et lié au niveau de son extrémité supérieure à un élément transversal supérieur de la structure de véhicule par l'intermédiaire d'une pièce de liaison déformable. La pièce de liaison est sensiblement perpendiculaire au plan du module. Le radiateur est fixé à la pièce de liaison par l'intermédiaire d'un doigt formé sur sa surface supérieur et qui est reçu dans un logement ménagé dans la pièce de liaison. Lors d'un choc d'une intensité déterminée au niveau de la partie avant du véhicule, le doigt déforme son logement, puis sort de ce dernier, permettant ainsi au radiateur d'effectuer un mouvement vers l'arrière de la structure de véhicule.

Un inconvénient de cette solution réside dans la complexité du montage du radiateur et notamment de sa partie supérieure. En particulier, le positionnement de la pièce liaison demande un nombre élevé de manipulations pour un opérateur, ce qui augmente le temps de montage et ainsi le coût de la fabrication du véhicule.

Un autre inconvénient de ces structures connues est la nécessité de prévoir des pièces supplémentaires (pièce de liaison et ses moyens de fixation) par rapport aux structures classiques.

Par ailleurs, l'implantation de la pièce de liaison est souvent incompatible avec l'espace disponible sous le capot de certains véhicules.

Enfin, il a été constaté que ce type d'agencement ne peut pas absorber efficacement l'énergie qui résulte d'un choc frontal. En particulier, la déformation de la pièce de liaison lors d'un choc frontal est insuffisante pour limiter les dégâts sur les pièces situées derrière le radiateur.

Un but de la présente invention est de pallier tout ou partie des inconvénients de l'art antérieur relevés ci-dessus.

A cette fin, l'agencement d'un module fonctionnel sur une structure avant de véhicule selon l'invention, par ailleurs conforme à la définition générique qu'en donne le préambule ci-dessus, est essentiellement caractérisé en ce que la partie supérieure de la structure sur laquelle est fixé le module comprend la partie supérieure d'au moins un élément de soutien, l'élément de soutien étant situé dans un plan sensiblement parallèle au plan du module, et en ce que la partie inférieure de l'élément de soutien est solidarisé avec une partie inférieure de la structure et en ce que l'élément de soutien comporte au moins une zone déformable.

Par ailleurs, l'agencement selon l'invention peut comporter l'une ou plusieurs des caractéristiques suivantes :
- l'élément de soutien est solidarisé avec la structure du véhicule uniquement au niveau de sa partie inférieure,
- l'élément de soutien est orienté sensiblement verticalement,
- la zone déformable est situé à proximité des moyens de fixation supérieurs du module,
- la structure comprend deux éléments de soutien,
- les éléments de soutiens sont situés respectivement sensiblement au niveau des deux extrémités latérales de la structure,
- la zone déformable comporte au moins une lumière,
- la lumière est situé dans un plan sensiblement parallèle au plan du module,
- la zone déformable comporte une pluralité d'amorces de pliage,
- les amorces de pliage sont situées sur des droites respectives sensiblement parallèles au plan du module et à l'axe transversal du véhicule,
- les moyens de fixation inférieurs sont situés sensiblement au niveau des extrémités latérales du module,
- les moyens de fixations supérieurs sont situés sensiblement au niveau des extrémités latérales du module,
- la partie inférieure de la structure comprend un élément transversal, tel qu'une traverse, recevant au moins une partie des moyens de fixation inférieurs du module,
- la structure comporte deux paires d'éléments longitudinaux, une première paire d'éléments longitudinaux inférieurs, tels que des prolonges de berceau, et une seconde paire d'éléments longitudinaux supérieurs, tels que des brancard, situées respectivement au niveau des deux extrémités latérales de la structure,
- les extrémités avant des éléments longitudinaux sont solidarisés respectivement avec la partie inférieure des deux éléments de soutien,
- les extrémités avant des deux paires d'éléments longitudinaux sont solidarisées respectivement avec la partie inférieure des deux éléments de soutien,
- les extrémités avant des deux paires d'éléments longitudinaux sont solidarisées respectivement avec la partie inférieure des deux éléments de soutien,
- les extrémités de l'élément transversal sont solidarisé respectivement avec la partie inférieure des deux éléments de soutien respectifs,
- le module a une forme sensiblement parallélépipédique,
- le module est une cassette de groupe moto-ventilateur,

D'autres particularités et avantages apparaîtront à la lecture de la description ci-après, faite en référence aux figures dans lesquelles :
- la figure 1 représente une vue en perspective et partielle de la structure avant d'un véhicule, ainsi que d'une cassette de groupe moto-ventilateur destinée à être montée sur cette structure selon l'invention,
- la figure 2 représente une vue en perspective d'un détail de la figure 1, illustrant l'agencement des éléments longitudinaux et transversaux de la structure avant du véhicule,
- la figure 3 représente une vue en perspective d'un détail de la figure 1, illustrant un point de fixation supérieur de la cassette de groupe moto-ventilateur sur la structure,
- la figure 4 représente une vue en perspective agrandie d'un détail de la structure de la figure 1, illustrant une zone déformable d'un élément de la structure,
- la figure 5 représente une vue en perspective d'un détail de la figure 2, illustrant un point de fixation inférieur de la cassette de groupe moto-ventilateur sur la structure
- la structure (2) comporte au moins deux éléments longitudinaux (3,13) situés respectivement au niveau des deux extrémités latérales de la structure

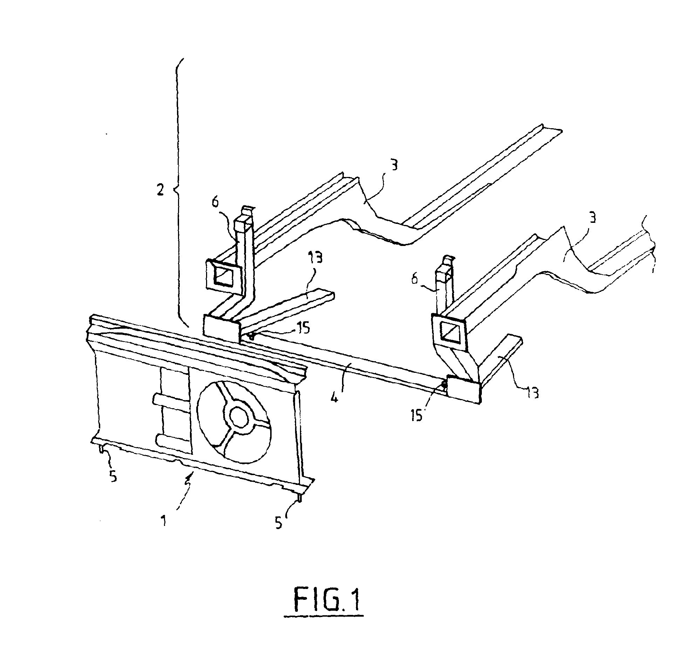

La figure 1 représente un module fonctionnel 1, constitué d'une cassette de groupe moto-ventilateur et une structure avant 2 de véhicule. La cassette de groupe moto-ventilateur 1 est destinée à être montée sur la structure avant 2 dans un plan sensiblement perpendiculaire à l'axe longitudinal du véhicule. La cassette 1 peut être constituée, par exemple, d'un matériau polymère.

La structure avant de véhicule 2 comporte deux paires d'éléments longitudinaux 3, 13. Une première paire d'éléments longitudinaux peut être constituée par des prolonges de berceau 13. Les prolonges de berceau 13 sont situés respectivement sensiblement au niveau des extrémités latérales de la structure 2. Les prolonges de berceau 3 sont situées en partie inférieure de la structure 2 dans un même plan horizontal.

La seconde paire d'éléments longitudinaux est constituée par exemple, de deux brancards 3. Les brancards 3 sont également situés en partie inférieure de la structure 2 respectivement au niveau des extrémités latérales. Les brancards 3 sont situés respectivement à l'aplomb des prolonges de berceau 13, dans un plan sensiblement parallèle au plan de celles-ci.

La structure 2 comprend également deux éléments de soutien 6 verticaux, situés au niveau des extrémités latérales de la structure 2. Les éléments de soutien 6 sont disposés au niveau des extrémités avant des éléments longitudinaux 3, 13 dans un plan sensiblement perpendiculaire à l'axe longitudinal du véhicule. De préférence, les éléments de soutien 6 tout comme les éléments longitudinaux 3, 13 et transversaux 4 ont la forme de poutres. Avantageusement, il s'agit d'éléments métalliques, par exemple en acier. Les éléments 6, 3, 13, 4 peuvent également être constitués d'aluminium ou de tout autre matériau approprié. Ils peuvent être creux ou pleins.

Au niveau de leur extrémité inférieure, les éléments de soutien 6 sont solidarisés de façon rigide respectivement avec les extrémités avant des deux prolonges de berceau 13.

Les éléments de soutien 6 sont également solidarisés respectivement avec les extrémités avant des deux brancards 3. De préférence, les éléments de soutien 6 sont reliées rigidement aux extrémités avant des brancards 3 sensiblement à mi-hauteur des éléments de soutiens 6.

De préférence, les éléments de soutien 6 sont soudés sur les brancards 3. La liaison peut également être réalisée avec des boulons ou des rivets. On peut également utiliser plusieurs des boulons ou des rivets conjointement au soudage. Le raccord entre les éléments de soutien 6 et les prolonges de berceau 13 est de préférence un raccord à vis.

Les extrémités inférieures des éléments de soutien 6 ne sont pas seulement solidarisées avec l'extrémité avant de la prolonge de berceau 13 respective, elles sont de préférence également reliées entre elles par l'intermédiaire d'un élément transversal 4, tel qu'une traverse. Le raccord entre les extrémités inférieures des éléments de soutien 6 et la traverse 4 est réalisé au niveau des extrémités respectives de la traverse 4.

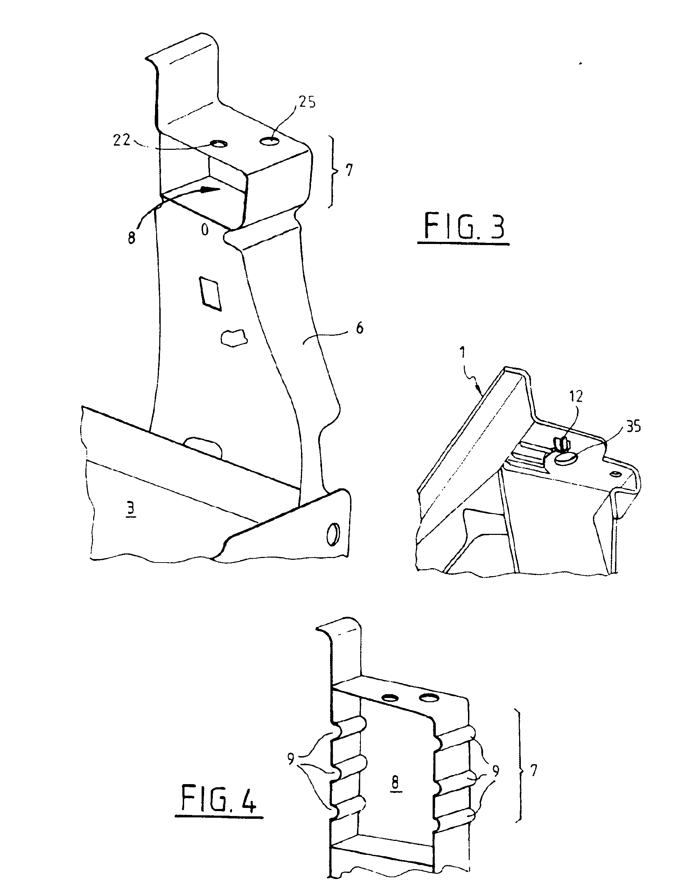

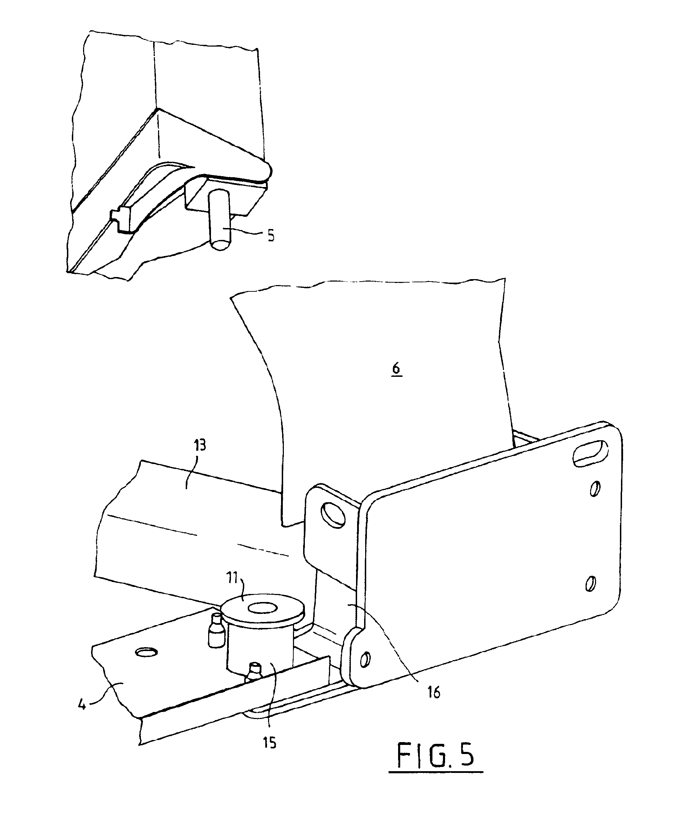

De préférence, le raccord entre les extrémités inférieures des éléments de soutien 6 et les extrémités respectives de la traverse 4 est réalisé par l'intermédiaire d'une pièce de liaison en L 13 (cf. figure 3). Par exemple, une extrémité de la traverse 4 est vissé sur une branche de la pièce en L 13. L'autre branche de la pièce en L 13 correspondante est solidarisé avec l'élément de soutien 6 au niveau de la face qui est tourné vers l'élément de soutien 6 opposé (cf. fig. 5).

Avantageusement, la traverse comporte au niveau de chacune de ses extrémités un moyen de fixation 15 tel qu'un logement cylindrique. Les deux moyens de fixation 15 sont destinés à coopérer respectivement avec deux doigts de fixation 5 complémentaires formés sur la cassette de groupe moto-ventilateur 1, assurant la fixation de la partie inférieure de la cassette 1 sur la partie inférieure de la structure 2.

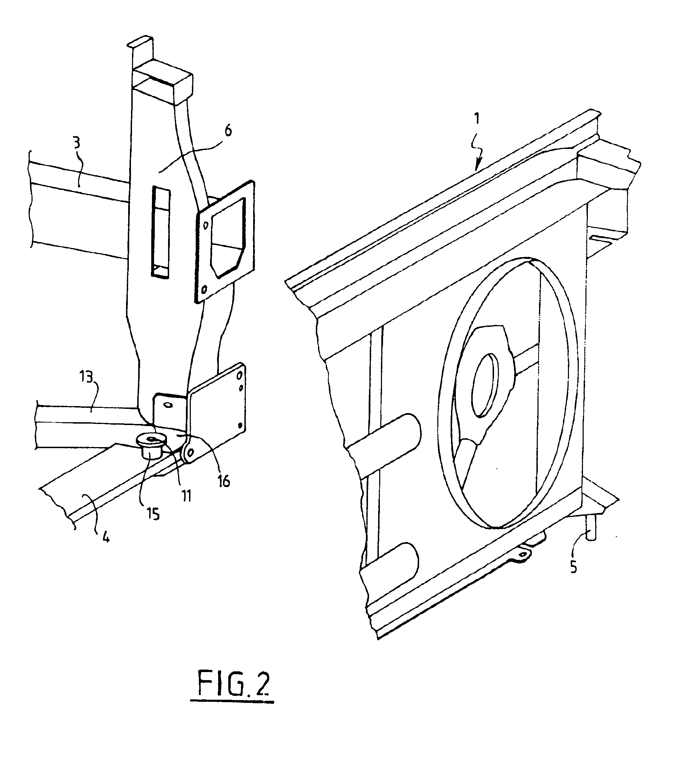

Les doigts de fixation 5 sont situés de préférence au niveau de l'extrémité inférieure de la cassette 1 respectivement sensiblement au niveau des extrémités latérales de cette dernière. De préférence, chacun des moyens de fixation 5 est un doigt orienté verticalement vers le bas dans le prolongement de la cassette 1 (cf. figure 2). Selon une caractéristique avantageuse, les doigts 5 sont moulés avec la cassette 1 ou sur celle-ci. Selon une autre caractéristique, les doigts 5 sont sécable sous un effort d'une intensité déterminée. Avantageusement, la longueur des doigts 5 est comprise entre 10 et 60 mm. Par exemple, elle est de l'ordre de 35 mm.

De préférence, chacun des moyens de fixation 15 est un logement cylindrique situé sur la face supérieure de l'élément transversal 4. Selon une caractéristique avantageuse, le logement 15 est conformé de façon à autoriser un faible déplacement du doigt 5 en son sein. De préférence, il comporte un revêtement intérieur 11 déformable. Avantageusement, le revêtement intérieur 11 est une entretoise en caoutchouc ou en tout autre matériau élastique ment déformable.

Bien entendu, le positionnement des moyens de fixation 5 et 15 au niveau des extrémités latérales de la cassette 1 n'est pas obligatoire. Les moyens de fixation 5, 15 peuvent être décalés vers la partie médiane de la cassette 1. Il est également possible d'assurer la fixation de la partie inférieure de la cassette sur la partie inférieure de la structure 2 par une seule paire de moyens de fixation complémentaires 5, 15 respectivement sur la traverse 4 et sur la cassette 1.

La fixation de la partie supérieure de la cassette 1 sur la partie supérieure de la structure 2 est assurée par des moyens de fixation 12, 35 et 22, 25 situés respectivement sur la cassette 1 et sur les éléments de soutien 6.

Avantageusement, la cassette 1 comporte, au niveau de chaque extrémité latérale supérieure, un premier moyen de fixation 12 et un second moyen de fixation 35 (cf. figure 3). Chacun des premiers et seconds moyens de fixation 12 et 35 est destiné à coopérer respectivement avec un moyen de fixation complémentaire 22, respectivement 25, formés sur les éléments de soutien 6.

De préférence, chacun des premiers moyens de fixation 12 est un doigt de centrage orienté verticalement vers le bas de la cassette. Selon une caractéristique avantageuse, les doigts de centrage 12 sont moulés avec la cassette ou surmoulés sur celle-ci.

Avantageusement, chacun des moyens de fixation 22 de l'élément de soutien destinés à coopérer avec un doigt de centrage 12 est un trou. Chaque trou 22 est situé sur une face horizontale d'une extrémité supérieure d'un élément de soutien 6.

Les seconds moyens de fixation 35 de la cassette sont constitués d'un second orifice destiné à coopérer avec un alésage 25 formé sur la face supérieure de l'élément de soutien 6 et un axe tel qu'une vis (non représenté).

Bien entendu, les doigts de centrage 12 et leurs moyens complémentaires 22 peuvent être supprimés sans affecter significativement la solidité de la fixation de la partie supérieure de la cassette 1 sur la partie 6 supérieure de la structure 2. Toutefois, l'utilisation de doigts de centrage 12 présente de nombreux avantages. Les doigts de centrage 12 facilitent le bon positionnement de la cassette 1 sur la structure 2 lors du montage du véhicule. L'opérateur ou le robot responsable de la fixation de la cassette sur la structure 2 trouve facilement la bonne position de la cassette 1, car les doigts de centrage s'enfoncent facilement dans les trous 22 correspondant en les approchant à ceux-ci du haut. Ainsi, la cassette est déjà pré-maintenue dans sa position terminale quand l'opérateur ou le robot réalise le raccord définitif au niveau des moyens de fixation 25 et 35.

Les éléments de soutien 6 comportent chacun une zone déformable ou fragilisée 7 (cf. figures 2 à 4). Avantageusement la zone déformable 7 est située en partie supérieure de l'élément de soutien 6 à proximité des éléments de fixation supérieurs 25, 35, 12, 22. De préférence, la zone déformable comporte une lumière 8 (cf. figure 3 et 4). Selon une caractéristique de l'invention, la lumière 8 est situé dans un plan sensiblement parallèle au plan contenant les deux éléments de soutien 6. Selon une caractéristique avantageuse, représenté à la figure 4, la zone déformable 7 peut comporter en plus une pluralité d'amorces de pliage 9. De préférence, les amorces de pliage 9 sont situées sur des droites respectives sensiblement parallèles au plan contenant les deux éléments de soutien 6 et à l'axe transversal du véhicule.

Les extrémités supérieures des éléments de soutien 6 peuvent être reliées par une traverse (non représentée par soucis de simplification), cependant, ces dernières ne sont pas solidarisées à des parties fixes ou ayant une très grande inertie du reste de la structure 2.

Ainsi, quand le véhicule subit un choc d'une intensité déterminée au niveau de sa partie avant, par exemple un choc avec un piéton, le capot du véhicule heurte directement ou indirectement (via par exemple des pièces intermédiaires) la cassette 1. Ceci entraîne un déplacement guidé d'au moins une partie de la cassette 1 vers l'arrière de la structure 2 en déformant les éléments de soutien 6 au niveau des zones déformable 7.

Un avantage de la structure selon l'invention est sa grande capacité d'absorption d'énergie lors d'un choc en partie avant.

L'agencement des éléments 6 de soutien permet en particulier d'absorber une grande partie de l'énergie d'un choc. Une partie de l'énergie du choc est transmise aux éléments longitudinaux (brancards 3, prolonges 13 de berceau) via les éléments de soutien 6 (les éléments longitudinaux 3, 13 constituent un socle rigide et solide). Une autre partie de cette énergie est dissipée au sein même des éléments 6 de soutien lorsque ceux-ci se déforment. En effet, les extrémités supérieures des éléments de soutien 6 qui sont "libres" par rapport au reste de la structure peuvent se courber vers l'arrière, guidant ainsi la partie supérieure de la cassette 1. Ce fléchissement vers l'arrière est permit par une fixation rigide la partie inférieure de l'élément 6 de soutien sur un élément rigide (brancard 3 notamment). Cette déformation est également facilitée par les amorces de pliage 9 et ouvertures 8.

Ce déplacement vers l'arrière d'au moins la partie supérieure de la cassette 1 est également permit par la configuration particulière des moyens de fixation inférieurs 11, 15 de la cassette 1 (débattement possible).

Durant au moins une partie du choc, la cassette 1 est ainsi en contact et maintenue au niveau de ses deux extrémités latérales

On comprend donc aisément que, tout en étant de structure simple et peu coûteuse, l'invention permet une meilleure dissipation d'énergie que les solutions traditionnelles. De plus, les déformations de la structure se trouvent essentiellement localisées dans les éléments 6 de soutien. Ceci limite les dégâts causés à la cassette 1 et à d'autres pièces coûteuses du véhicule situées derrière celle-ci.

De plus, lorsque les doigts 5 de fixation inférieurs sont sécables, un choc d'une intensité déterminée au niveau de la partie avant du véhicule peut également entraîner un détachement de la cassette 1 de sa fixation inférieure. Cela permet un plus grand déplacement de la cassette 1 tout en conservant une capacité d'absorption d'énergie élevée, telle que décrite ci-dessus.

## Revendications

1. Agencement d'un module fonctionnel (1) sur une structure avant de véhicule (2) comportant des moyens de fixation inférieurs (5, 15) assurant la fixation de la partie inférieure du module (1) sur une partie inférieure de la structure (2) et des moyens de fixation supérieurs (25, 35) assurant la fixation de la partie supérieure du module (1) sur une partie supérieure de la structure (2) de façon à disposer le module (1) dans un plan sensiblement perpendiculaire à l'axe longitudinal du véhicule et de façon que, lors d'un choc d'une intensité déterminée au niveau de la partie avant du véhicule, au moins une partie du module (1) effectue un déplacement guidé vers l'arrière de la structure (2), la partie supérieure de la structure (2) sur laquelle est fixé le module (1) comprenant la partie supérieure d'au moins un élément de soutien (6), **caractérisé en ce que** l'élément de soutien (6) est situé dans un plan sensiblement parallèle au plan du module (1), la partie inférieure de l'élément de soutien (6) étant solidarisée avec une partie inférieure de la structure (2) de sorte que l'élément de soutien (6) est solidarisé avec la structure (2) du véhicule uniquement au niveau de sa partie inférieure, et **en ce que** l'élément de soutien (6) comporte au moins une zone déformable (7).

2. Agencement selon la revendication 1, **caractérisé en ce que** l'élément de soutien (6) est orienté sensiblement verticalement.

3. Agencement selon l'une quelconque des revendications 1 ou 2, **caractérisé en ce que** la zone déformable (7) est situé à proximité des moyens de fixation supérieurs (25, 35, 12, 22) du module (1).

4. Agencement selon l'une quelconque des revendications 1 à 3, **caractérisé en ce que** la structure (2) comprend deux éléments de soutien (6).

5. Agencement selon la revendication 4 **caractérisé en ce que** les éléments de soutiens (6) sont situés respectivement sensiblement au niveau des deux extrémités latérales de la structure (2).

6. Agencement selon l'une quelconque des revendications 1 à 5 **caractérisé en ce que** la zone déformable (7) comporte au moins une lumière (8).

7. Agencement selon l'une quelconque des revendications 1 à 6, **caractérisé en ce que** la lumière (8) est situé dans un plan sensiblement parallèle au plan du module (1).

8. Agencement selon l'une quelconque des revendications 1 à 7, **caractérisé en ce que** la zone déformable (7) comporte une pluralité d'amorces de pliage (9).

9. Agencement selon la revendication 8 **caractérisé en ce que** les amorces de pliage (9) sont situées sur des droites respectives sensiblement parallèles au plan du module (1) et à l'axe transversal du véhicule.

10. Agencement selon l'une quelconque des revendications 1 à 9, **caractérisé en ce que** les moyens de fixation inférieurs (5, 15) sont situés sensiblement au niveau des extrémités latérales du module (1).

11. Agencement selon l'une quelconque des revendications 1 à 10, **caractérisé en ce que** les moyens de fixations supérieurs (25, 35, 12, 22) sont situés sensiblement au niveau des extrémités latérales du module (1).

12. Agencement selon l'une quelconque des revendications 1 à 11, **caractérisé en ce que** la partie inférieure de la structure (2) comprend un élément transversal (4), tel qu'une traverse, recevant au moins une partie des moyens de fixation inférieurs (5, 15) du module (1).

13. Agencement selon l'une quelconque des revendications 1 à 12, **caractérisé en ce que** la structure (2) comporte au moins deux éléments longitudinaux (3,13) situés respectivement au niveau des deux extrémités latérales de la structure (2).

14. Agencement selon l'une quelconque des revendications 1 à 13, **caractérisé en ce que** la structure (2) comporte deux paires d'éléments longitudinaux (3,13), une première paire d'éléments longitudinaux inférieurs (13), tels que des prolonges de berceau, et une seconde paire d'éléments longitudinaux supérieurs (3), tels que des brancard, situées respectivement au niveau des deux extrémités latérales de la structure (2).

15. Agencement selon les revendications 5 et 13, **caractérisé en ce que** les extrémités avant des éléments longitudinaux (3, 13) sont solidarisés respectivement avec la partie inférieure des deux éléments de soutien (6).

16. Agencement selon les revendications 5 et 14 **caractérisé en ce que** les extrémités avant des deux paires d'éléments longitudinaux (3, 13) sont solidarisées respectivement avec la partie inférieure des deux éléments de soutien (6).

17. Agencement selon les revendications 12 et 16, **caractérisé en ce que** les extrémités de l'élément transversal (4) sont solidarisé respectivement avec la partie inférieure des deux éléments de soutien (6) respectifs.

18. Agencement selon l'une quelconque des revendications 1 à 17, **caractérisé en ce que** le module (1) a une forme sensiblement parallélépipédique.

19. Agencement selon l'une quelconque des revendications 1 à 18 **caractérisé en ce que** le module (1) est une cassette de groupe moto-ventilateur

## Claims

1. Arrangement of a functional module (1) on a front structure of a vehicle (2) comprising lower fixing means (5, 15) for fixing the lower portion of the module (1) to a lower portion of the structure (2) and upper fixing means (25, 35) for fixing the upper portion of the module (1) to an upper person of the structure (2) so as to arrange the module (1) in a plane substantially perpendicular to the longitudinal axis of the vehicle and so that, at the time of an impact of a given intensity in the front portion of the vehicle, at least part of the module (1) performs a guided displacement towards the back of the structure (2), the upper portion of the structure (2) to which the module (1) is fixed comprising the upper portion of at least one support element (6), **characterised in that** the support element (6) is located in a plane substantially parallel to the plane of the module (1), the lower portion of the support element (6) being made integral with a lower portion of the structure (2) so that the support element (6) is made integral with the structure (2) of the vehicle only in its lower portion, and **in that** the support element (6) comprises at least one deformable zone (7).

2. Arrangement according to Claim 1, **characterised in that** the support element (6) is oriented substantially vertically.

3. Arrangement according to any one of Claims 1 or 2, **characterised in that** the deformable zone (7) is located near the upper fixing means (25, 35, 12, 22) of the module (1).

4. Arrangement according to any one of Claims 1 to 3, **characterised in that** the structure (2) comprises two support elements (6).

5. Arrangement according to Claim 4, **characterised in that** the support elements (6) are respectively located substantially level with the two lateral ends of the structure (2).

6. Arrangement according to any one of Claims 1 to 5, **characterised in that** the deformable zone (7) comprises at least one slot (8).

7. Arrangement according to any one of Claims 1 to 6, **characterised in that** the slot (8) is located in a plane substantially parallel to the plane of the module (1).

8. Arrangement according to any one of Claims 1 to 7, **characterised in that** the deformable zone (7) comprises a plurality of incipient folds (9).

9. Arrangement according to Claim 8, **characterised in that** the incipient folds (9) are located on respective straight lines substantially parallel to the plane of the module (1) and to the transverse axis of the vehicle.

10. Arrangement according to any one of Claims 1 to 9, **characterised in that** the lower fixing means (5, 15) are located substantially level with the lateral ends of the module (1).

11. Arrangement according to any one of Claims 1 to 10, **characterised in that** the upper fixing means (25, 35, 12, 22) are located substantially level with the lateral ends of the module (1).

12. Arrangement according to any one of Claims 1 to 11, **characterised in that** the lower portion of the structure (2) comprises a transverse element (4), such as a cross-piece, receiving at least part of the lower fixing means (5, 15) of the module (1).

13. Arrangement according to any one of Claims 1 to 12, **characterised in that** the structure (2) composes at least two longitudinal elements (3,13) respectively located level with the two lateral ends of the structure (2).

14. Arrangement according to any one of Claims 1 to 13, **characterised in that** the structure (2) comprises two pairs of longitudinal elements (3,13), a first pair of lower longitudinal elements (13), such as cradle extensions, and a second pair of upper longitudinal elements (3), such as shanks, respectively located level with the two lateral ends of the structure (2).

15. Arrangement according to Claims 5 and 13, **characterised in that** the front ends of the longitudinal elements (3, 13) are respectively made integral with the lower portions of the two support elements (6).

16. Arrangement according to Claims 5 and 14 **characterised in that** the front ends of the two pairs of longitudinal elements (3, 13) are respectively made integral with the lower portions of the two support elements (6).

17. Arrangement according to Claims 12 and 16, **characterised in that** the ends of the transverse element (4) are respectively made integral with the lower portion of the two respective support elements (6).

18. Arrangement according to any one of Claims 1 to 17, **characterised in that** the module (1) has a substantially parallelepipedal form.

19. Arrangement according to any one of Claims 1 to 18 **characterised in that** the module (1) is a fan unit cassette.

## Patentansprüche

1. Anordnung eines Funktionsmoduls (1) an einem Fahrzeug-Vorderbau (2) mit unteren Befestigungsmitteln (5, 15), die den unteren Abschnitt des Moduls (1) an einem unteren Abschnitt des Aufbaus (2) befestigen, und oberen Befestigungsmitteln (25, 35), die den oberen Abschnitt des Moduls (1) an einem oberen Abschnitt des Aufbaus (2) befestigen, sodass sich das Modul (1) in einer Ebene befindet, die im Wesentlichen senkrecht zur Längsachse des Fahrzeugs verläuft und dass bei einem Aufprall einer bestimmten Stärke im vorderen Bereich des Fahrzeugs mindestens ein Abschnitt des Moduls (1) eine geführte Bewegung zur Hinterseite des Aufbaus (2) ausführt, wobei der obere Abschnitt des Aufbaus (2), an dem das Modul (1) befestigt ist, den oberen Abschnitt von mindestens einem Halteelement (6) umfasst, **dadurch gekennzeichnet, dass** das Halteelement (6) in einer Ebene angeordnet ist, die im Wesentlichen parallel zur Ebene des Moduls (1) ist, wobei der untere Abschnitt des Halteelements (6) mit einem unteren Abschnitt des Aufbaus (2) derart verbunden ist, dass es nur an seinem unteren Abschnitt mit dem Aufbau (2) des Fahrzeugs verbunden ist, und **dadurch**, dass das Halteelement (6) mindestens einen verformbaren Bereich (7) aufweist.

2. Anordnung nach Anspruch 1, **dadurch gekennzeichnet, dass** das Halteelement (6) im Wesentlichen vertikal ausgerichtet ist.

3. Anordnung nach Anspruch 1 oder 2, **dadurch gekennzeichnet, dass** sich der verformbare Bereich (7) in der Nähe der oberen Befestigungsmittel (25, 35, 12, 22) des Moduls (1) befindet.

4. Anordnung nach einem der Ansprüche 1 bis 3, **dadurch gekennzeichnet, dass** der Aufbau (2) zwei Halteelemente (6) aufweist.

5. Anordnung nach Anspruch 4, **dadurch gekennzeichnet, dass** sich die Halteelemente (6) im Wesentlichen an den beiden seitlichen Enden des Aufbaus (2) befinden.

6. Anordnung nach einem der Ansprüche 1 bis 5, **dadurch gekennzeichnet, dass** der verformbare Bereich (7) mindestens eine Öffnung (8) aufweist.

7. Anordnung nach einem der Ansprüche 1 bis 6, **dadurch gekennzeichnet, dass** sich die Öffnung (8) in einer Ebene befindet, die im Wesentlichen parallel zur Ebene des Moduls (1) ist.

8. Anordnung nach einem der Ansprüche 1 bis 7, **dadurch gekennzeichnet, dass** der verformbare Bereich (7) mehrere Ausgangspunkte für Biegung (9) aufweist.

9. Anordnung nach Anspruch 8, **dadurch gekennzeichnet, dass** sich die Ausgangspunkte für Biegung (9) auf Geraden befinden, die im Wesentlichen parallel zur Ebene des Moduls (1) und zur Querachse des Fahrzeugs sind.

10. Anordnung nach einem der Ansprüche 1 bis 9, **dadurch gekennzeichnet, dass** sich die unteren Befestigungsmittel (5, 15) im Wesentlichen an den seitlichen Enden des Moduls (1) befinden.

11. Anordnung nach einem der Ansprüche 1 bis 10, **dadurch gekennzeichnet, dass** sich die oberen Befestigungsmittel (25, 35, 12, 22) im Wesentlichen an den seitlichen Enden des Moduls (1) befinden.

12. Anordnung nach einem der Ansprüche 1 bis 11, **dadurch gekennzeichnet, dass** der untere Abschnitt des Aufbaus (2) ein Querelement (4) wie einen Querträger aufweist, der zumindest einen Teil der unteren Befestigungsmittel (5, 15) des Moduls (1) aufnimmt.

13. Anordnung nach einem der Ansprüche 1 bis 12, **dadurch gekennzeichnet, dass** der Aufbau (2) mindestens zwei Längselemente (3, 13) aufweist, die sich an den beiden seitlichen Enden des Aufbaus (2) befinden.

14. Anordnung nach einem der Ansprüche 1 bis 13, **dadurch gekennzeichnet, dass** der Aufbau (2) zwei Paare von Längselementen (3, 13) ausweist, nämlich ein erstes Paar an unteren Längselementen (13) wie zum Beispiel Verlängerungen des Hilfsrahmens und ein zweites Paar an oberen Längselementen (3) wie beispielsweise Längsträger, die sich an den beiden seitlichen Enden des Aufbaus (2) befinden.

15. Anordnung nach den Ansprüchen 5 und 13, **dadurch gekennzeichnet, dass** die vorderen Enden der Längselemente (3, 13) mit dem unteren Abschnitt der beiden Halteelemente (6) verbunden sind.

16. Anordnung nach den Ansprüchen 5 und 14, **dadurch gekennzeichnet, dass** die vorderen Enden der beiden Paare an Längselementen (3, 13) mit dem unteren Abschnitt der beiden Halteelemente (6) verbunden sind.

17. Anordnung nach den Ansprüchen 12 und 16, **dadurch gekennzeichnet, dass** jedes der Enden des Querelements (4) mit dem unteren Abschnitt eines der beiden Halteelemente (6) verbunden ist.

18. Anordnung nach einem der Ansprüche 1 bis 17, **dadurch gekennzeichnet, dass** das Modul (1) im Wesentlichen parallelepipedförmig ist.

19. Anordnung nach einem der Anspruche 1 bis 18, **dadurch gekennzeichnet, dass** das Modul (1) eine Lüftersatz-Kassette ist.
